# EUROPEAN PATENT APPLICATION

(11) **EP 2 108 812 A1**
(43) Date of publication of application: **14.10.2009**
(21) Application number: 08253016.3
(22) Date of filing: 12.09.2008
(51) Int. Cl.: F02N 3/02, F02N 11/00, F02N 15/02, A01D 34/68

(54) **Starter system for internal combustion engine**

(30) Priority: 09.04.2008 US 100160
(71) Applicant: Techtronic Industries Company Limited, Tsuen Wan, New Territories (HK)
(72) Inventor: Cook, Trent A., Anderson, SC29621 (US)
(74) Representative: Martin, David John

(57) **Abstract**

A starting system for an engine having a crankshaft with a first end and a second end that includes a recoil-type manual pulley configured to selective engage a first ratchet mechanism operatively connected to the first end of the crankshaft and an electric motor gearingly connected to a starter gear having a cam assembly configured to selective engage a second ratchet mechanism operatively connected to the second end of the crankshaft.

## Description

The present invention relates to a starter system for an engine, particularly an internal combustion engine for a portable working machine. The starter system of the present invention incorporates a manual starter and an electric starter, each operating independently of the other.

### SUMMARY

In a first aspect the invention provides a starting system for an engine having a crankshaft with a first end and a second end comprising a recoil-type manual pulley configured to selectively engage a first ratchet mechanism operatively connected to the first end of the crankshaft, and an electric motor gearingly driving a starter gear having a second cam assembly configured to selectively engage a second ratchet assembly operatively connected to the second end of the crankshaft.

The manual pulley may include a rope reel and a first cam assembly provided on a first side of the rope reel for selectively engaging the first ratchet mechanism. The cam assembly may include at least one cam claw to engage the first ratchet mechanism.

A rotary member may be rotationally fixed with the first end of the crankshaft, the rotary member carrying the first ratchet mechanism. The first ratchet mechanism may be biased radially inward to contact the first cam assembly.

The second cam assembly may include at least one cam claw to engage the second ratchet mechanism. A torsion spring may be used to connect the starter gear and second cam assembly.

The operation of the manual pulley is preferably independent of operating of the electric motor, when the starter gear rotates the pulley is stationary, and when the pulley rotates the starter gear is stationary.

In a further aspect the invention resides in a stationary system for an engine having a crankshaft with a first end and a second end comprising a manual starter operatively connected to the first end of the crankshaft to rotate the crankshaft in a first direction to start the engine, and an electric starter operatively connected to the second end of the crankshaft to rotate the crankshaft in the first direction to start the engine independently of the manual starter.

### BRIEF DESCRIPTION OF THE DRAWINGS

Embodiments of the invention are now described, by way of example only, in accordance with the following drawings in which:

Fig. 1 shows a side view of a portion of a string trimmer that incorporates the starter system of the present invention.

Fig. 2 is a side cross sectional view of the string trimmer of Fig. 1 with the housing removed to better illustrate certain aspects of the present invention.

Fig. 3 is a top cross sectional view of the string trimmer of Fig. 1 with the housing removed to better illustrate certain aspects of the present invention.

Fig. 4 is a side perspective view of a portion of the manual starter.

Fig. 5 is a partially exploded view of the manual starter shown in Fig. 4.

Fig. 6 is an end view of the rope reel with the first cam assembly and a portion of the first ratchet assembly.

Fig. 7 is an end view along line 7-7 in Fig. 4.

Fig. 8 is an end perspective view of a portion of the string trimmer of Fig. 1 with the housing removed and with other parts removed to illustrate certain features of the present invention.

Fig. 9 is an exploded perspective view of a portion of the electric starter.

Fig. 10 is an end view of the second ratchet mechanism and gear assembly of the electric starter taken from the engine and looking toward the gear assembly.

Fig. 11 is an exploded perspective view of a portion of the electric starter showing the cam member gear, damper spring, second cam assembly, and a portion of the second ratchet mechanism.

### DETAILED DESCRIPTION

The invention is described with reference to the drawings in which like elements are referred to by like numerals. The relationship and functioning of the various elements of this invention are better understood by the following description. Each aspect so defined may be combined with any other aspect or aspects unless clearly indicated to the contrary.

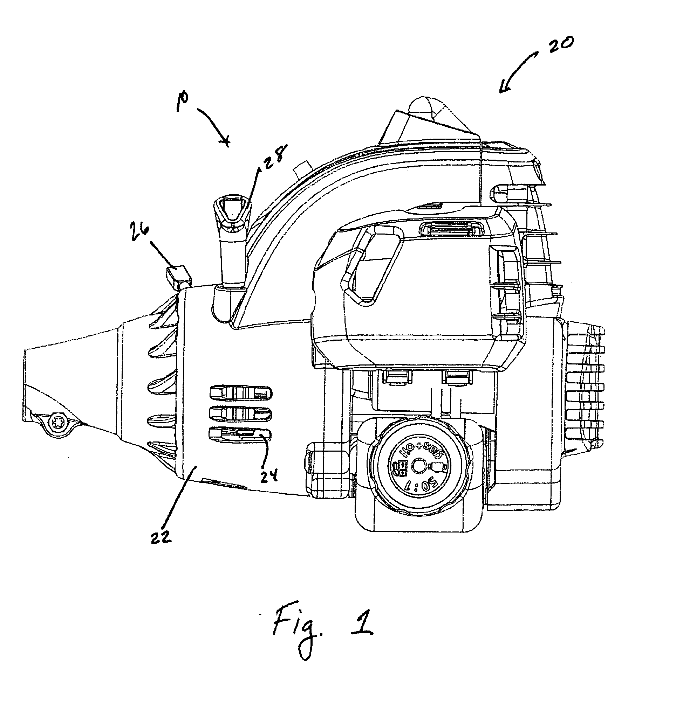

Turning now to Fig. 1, it shows the starter system 10 of the present invention incorporated with an engine operated device 20 such as a portable engine device. In particular, the engine operated device 20 shown in Fig. 1 may be a portion of a string trimmer that includes the starter system 10 of the present invention as shown.
In general, the starter system 10 of the present invention includes a manual starter 70 and an electric starter 150 that can operate independently of each other. A pull handle 28 is provided to be accessible from an outer portion of the casing or housing 22 to operate the manual starter 70. A connector 26 for engaging a battery (not shown) is also provided to be accessible from outside the housing 22 for powering operation of the electric starter 150. While the present invention is shown as being used with a string trimmer device, one of skill in the art will appreciate that the principles and features of the starter system 10 of the present invention is applicable to a variety of engine operated devices 20, particularly smaller engines that typically are provided with a manual starter 70. In addition, while the starter system 10 of the present invention is illustrated in connection with a half-crank engine, one of skill in the art will understand that the starter system of the present invention can be used on a full-crank engine.

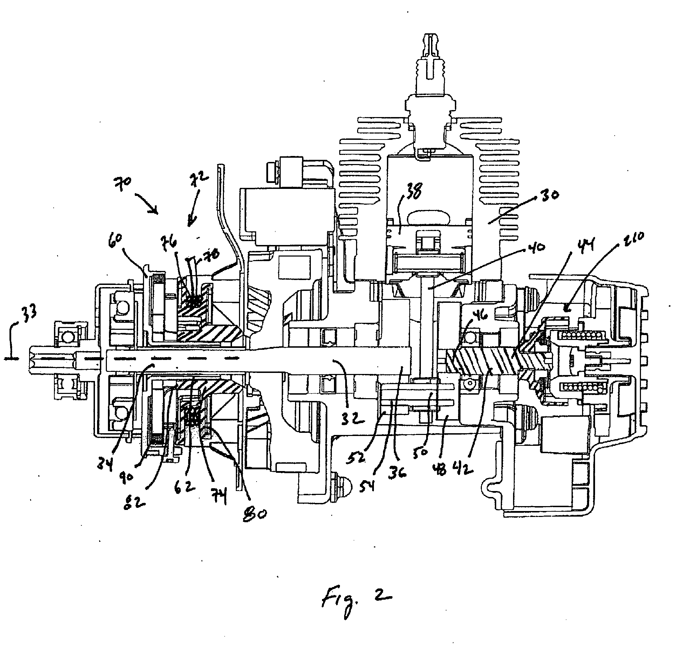

Turning now to Fig. 2, a side cross-sectional view of the portion of the engine operated device 20 of Fig. 1 is shown. A conventional internal combustion engine 30 is shown with a crankshaft 32 disposed along a longitudinal axis 33 with the crankshaft having first end 34 and a second end 36. The first end 34 may be considered to be the power output end and may be used to drive an implement or other workpiece. The second end 36 is driven by the piston 38 of the internal combustion engine 30. Because the structure and operation of the internal combustion engine 30 are well known to those of skill in the art, a description of its various components in relation to the starter system 10 of the present invention will not be provided.

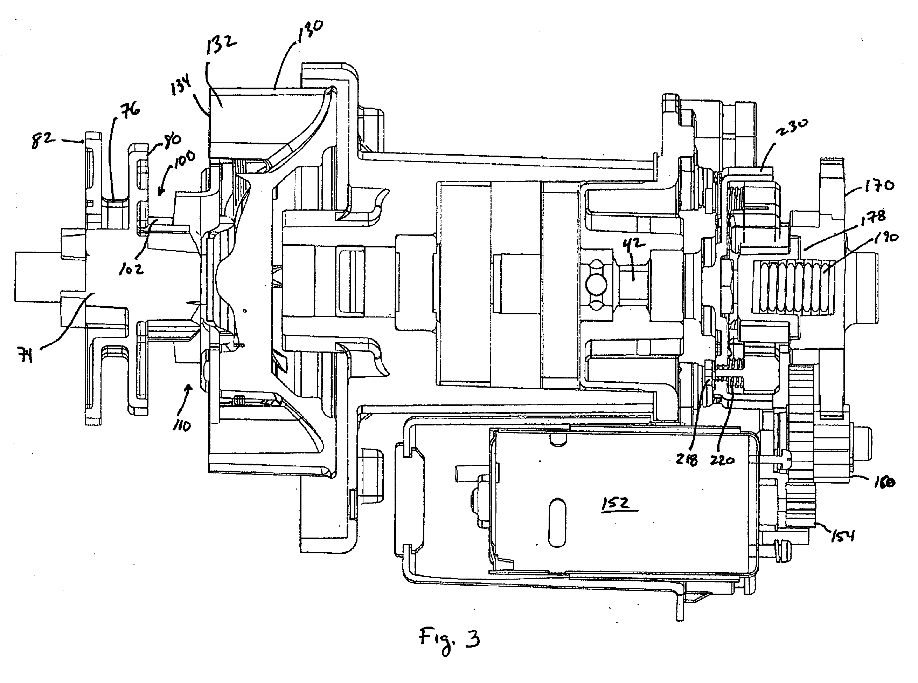

Referring now to the first end 34 of the crankshaft 32, a description of the manual starter 70 will be provided. The manual starter 70 includes a manual pulley assembly 72 that is rotatably mounted within the housing 22 on a reel support shaft 62 that extends from a reel support 60, which is fixed to one of the housing 22, the engine crankcase, or both. The manual pulley assembly 72 includes a rope reel 74 having an outer circumferential surface 76 around which a recoil rope 78 is wound. One end of the recoil rope is attached to a handle 28 and the other end is attached to the rope reel 74. When the handle 28 is pulled, the rope reel 74 rotates in a first direction causing a first cam assembly 100 (see Fig. 3) to likewise rotate in a first direction and to engage a first ratchet mechanism 110 formed on a rotary member 130 fixed to the first end 34 of the crankshaft 32 so that the crankshaft 32 is rotated to start the engine 30.

As shown in FIG. 2, the rope reel 74 is rotatably supported on a reel support shaft 62 that projects inward toward the engine 30. The reel support shaft 62 extends from and may be monolithically formed with a reel support 60 that is positionally fixed to one of the housing 22, the engine crankcase, or both. The recoil rope 78 has one end that is drawn to the outside of the housing 22 by the handle 28 and the other end is fixed to the rope reel 74.

Referring now to Figs. 2 and 3, the rope reel 74 has a first side 80 and a second side 82. The first side 80 faces the engine 30 and the second side 82 is opposite the first side 80. The second side 82 is associated with a recoil spiral spring 90 for rewinding the rope reel 74 and thus the rope 78. The recoil spiral spring 90 has one end that is fixed to the reel support 60 and a second end that is fixed to the rope reel 74. When the rope 78 is pulled to cause the rope reel 74 to be rotated, a rotational force is accumulated on the recoil spiral spring 90. When the pulling force of the rope 78 is released, the rope reel 74 is rotated in the reverse direction by the rotational force accumulated on the recoil spiral spring 90. As a result, the rope 78 is rewound around the rope reel 74.

A first cam assembly 100 is provided on the first side 80 of the rope reel 74 and is adapted to transmit the rotation of the rope reel 74 to a rotary member 130 mounted on the crankshaft 32 and, in particular at the first end 34 of the crankshaft 32. In one embodiment, the cam assembly 100 is formed as part of the rope reel 74. Alternatively, the rope reel 74 can be formed of plastic or metal so that the cam assembly 100 can be monolithically formed with the rope reel 74.

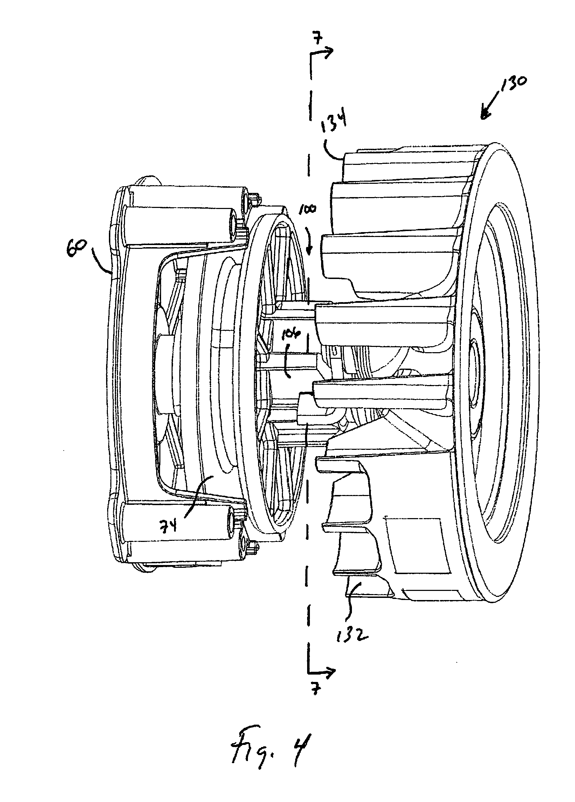

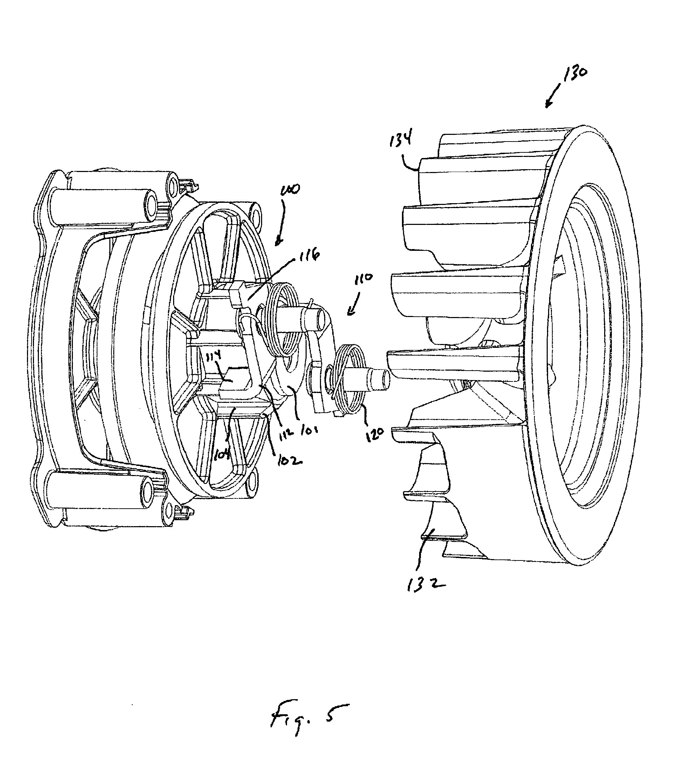

As best seen in Figs. 4 and 5, the cam assembly 100 is provided with a plurality of cam claws 102 on the outer circumferential surface and in a circumferential direction so that the cam claws 102 and the first ratchet mechanism 110 are engaged with and disengaged from the first ratchet mechanism 110 provided on the rotary member 130. When the cam claws 102 are engaged with the first ratchet mechanism 110, the rotation of the cam assembly 100 is transmitted to the rotary member 130, so that crankshaft 32 of the engine 30 is rotated. As discussed below, the first ratchet mechanism 110 acts as a centrifugal clutch. After the engine 30 is started, the rotary member 130 is driven by the engine 30, and centrifugal force causes the first ratchet mechanism 110 to be moved in a direction so that the first ratchet mechanism 110 disengages from the cam claws 102. As a result, the transmission of rotation between the engine 30 and the first cam assembly 100 and thus the rope reel 74 does not exist so that the rope reel 74 is not rotated when the engine 30 drives the crankshaft 32.

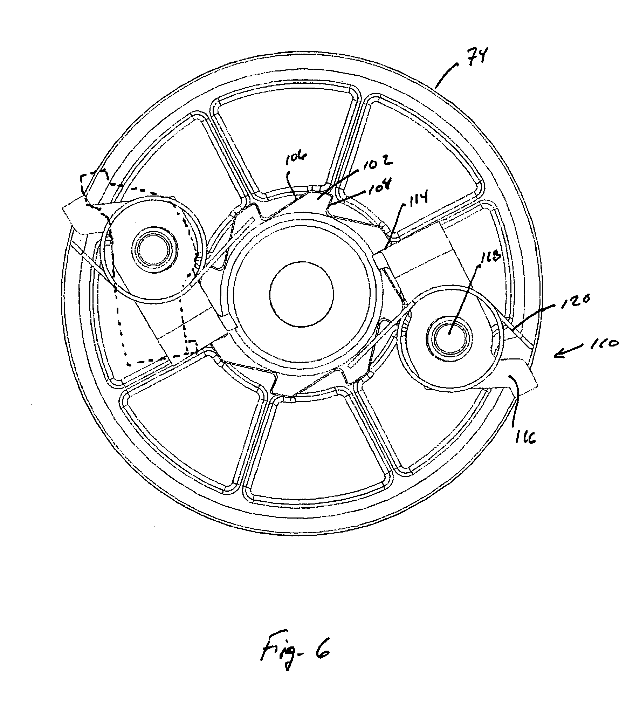

As best seen in Figs. 5 and 6, the cam assembly 100 is provided with a plurality of circumferentially spaced cam claws 102 that extend radially from a central hub 101 to define an engagement surface 104 of the cam claw 102 that is engaged by the first ratchet mechanism 110 to transmit rotation of the cam assembly 100 to the rotary member 130. Adjacent the cam claw 102, a ramp 106 is provided connecting the tip of the cam claw 102 to the outer peripheral surface of the central hub 101. The ramp 106 is sloped in a manner such that the first ratchet mechanism 110 can ride on the ramp 106 when the first ratchet mechanism 110 is not being driven by the cam assembly 100, as will become clear from the following description.

As noted above, when the rotary member 130 rotates, the crankshaft 32 rotates and vice versa. In one aspect, the rotary member 130 is fixed to the crankshaft 32. It is not important how the rotary member 130 is fixed to the crankshaft 32 so long as the rotary member 130 rotates simultaneously with the crankshaft 32. In one embodiment, the rotary member 130 is a flywheel. In another embodiment, the rotary member has vanes 132 provided on one side 134. In this instance, as shown in Fig. 1, the housing 22 is provided with openings or vents 24 so that when the rotary member 32 with vanes 132 rotates, air can be directed through the openings 24 by the action of the vanes 132.

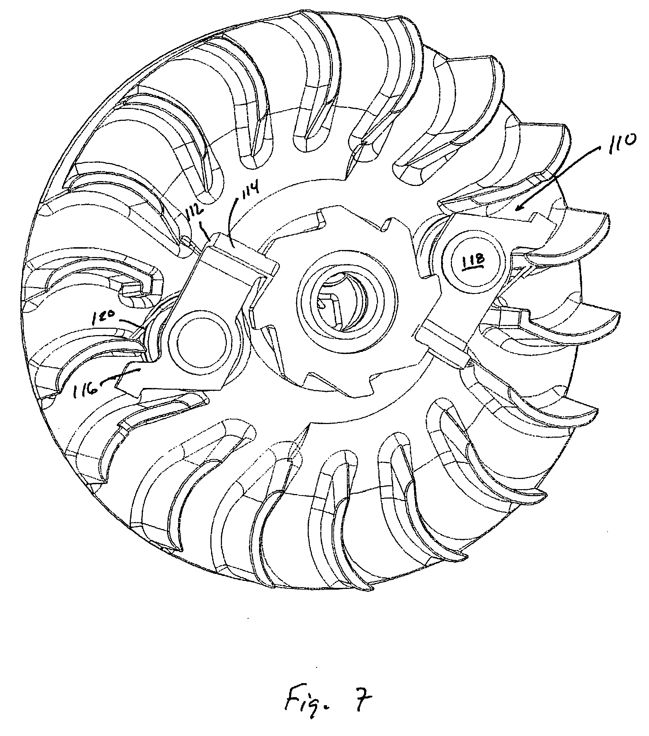

Referring to Fig. 7, the side 134 of the rotary member 130 facing the cam assembly 100 on the rope reel 74 includes a first ratchet mechanism 110 that performs as a centrifugal clutch. In this regard, a pin 118 extends outward from the rotary member 130 to carry a spring biased first ratchet mechanism 110. The first ratchet mechanism 110 includes at least one ratchet claw 114. Alternatively, the ratchet mechanism 110 may include a plurality of ratchet claws 114 (e.g., two, three, or four) equally spaced apart to balance the load and forces. The first ratchet mechanism 110 is formed as a bent arm 112 with one end forming a ratchet claw 114 to engage a cam claw 102 on the cam assembly 100. The second or opposite end 116 is biased by a coil spring 120.

The coiled spring 120 is provided to bias the ratchet claw 114 in a radially inward direction. In other words, the ratchet claw 114 is biased in a direction toward the cam assembly 100 provided on the rope reel 74. Accordingly, when the rotary member 130 is at rest (not spinning), the ratchet claw 114 is in contact with the cam assembly 100.

The spring force of the coil spring 120 is such that the first ratchet mechanism 110 acts as a centrifugal clutch. After the engine 30 is started and the rotary member 130 is driven by the engine 30, centrifugal force causes the ratchet claw 114 to move radially outward such that it disengages from the cam claw 102 (shown in dotted lines in Fig. 6). It will be appreciated that as the rotation of the rotary member 130 slows, the ratchet claw 114 will tend to move in a radially inward direction.
Because the cam claws 102 are fashioned with a ramped surface 106, the ratchet claw 114 can ride across the ramp 106 and over the cam claws 102.

The operation of the manual pulley 72 in the above embodiment will now be described. Before the engine 30 is started, the first ratchet mechanism 110 formed on the rotary member 130, which is joined to the crankshaft 32 of the engine 30 is disposed in a position in which the first ratchet mechanism 110 is engaged with the cam claws 102 formed on the cam assembly 100 because of the biasing action of the ratchet spring 120. When the handle 28 for the rope 78 is pulled, the rope reel 74 is rotated to cause the cam assembly 100 to be rotated. The cam claws 102 engage the first ratchet mechanism 110, and in particular, the ratchet claw 114 to cause the rotary member 130 to be rotated and thus to cause the crankshaft 32 of the engine 30 to be rotated. When the rope reel 74 is rotated and exceeds the starting load on the engine 30 the crankshaft 32 is rotated to start the engine 30. When the engine 30 starts, the crankshaft 32 rotates so that the rotary member 130 rotates causing the first ratchet mechanism 110 to move radially outward by the effect of centrifugal force. As a result, the ratchet claw 114 member disengages from the cam claw 102 of the cam assembly 100. When the rope 78 is loosened after the engine 32 is started, the rope reel 74 is rotated in the reverse direction by the rotational force accumulated in the recoil spiral spring 90, to rewind the rope 78 around the rope reel 74.

Turning back to Fig. 2 and to the second end 36 of the crankshaft 32, an electric starter 150 is provided. Of course it will be appreciated that the electric starter 150 operates independently from the manual starter 70. Thus, operation of the manual starter 70 does not affect the electric starter 150 and operation of the electric starter 150 does not affect the manual starter 70.

The electric starter 150 includes an electric motor 152 that includes a connector 26 disposed and accessible from the outside of the housing 22 to removably and electrically connect a battery (not shown) to the motor 152. The motor 152 is energized either by direct connection of the battery to the connector 26 or by providing a switch to complete an electrical circuit after the battery has been electrically connected with the connector 26.

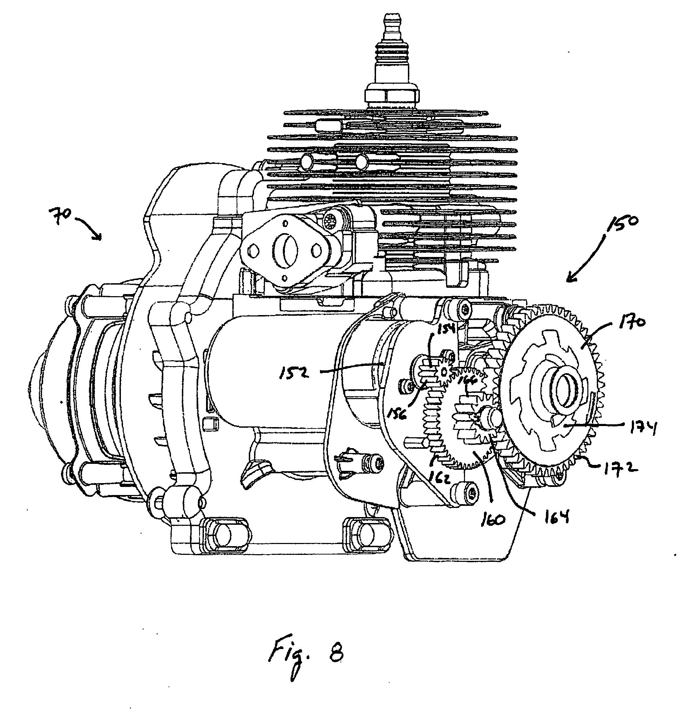

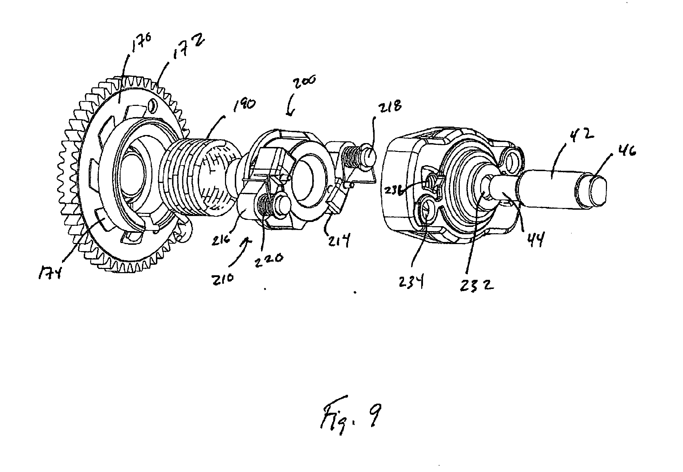

As illustrated in Figs. 8 and 9, the motor 152 is gearingly connected to a second cam assembly 200 that engages a second ratchet mechanism 210 operatively connected to the crankshaft 32 so that the crankshaft 32 is rotated to start the engine 30. In one embodiment (not shown), the second ratchet mechanism 210 is directly connected to the second end 36 of the crankshaft 32. In another embodiment, as best seen in Fig. 2, the second ratchet mechanism 210 is indirectly connected to the second end 36 of the crankshaft 32. In this embodiment, the second ratchet mechanism 210 is connected to a first end 44 of an adapter shaft 42. The second end 46 of the adapter shaft 42 carries a cam member 48 having a pin 50 that is connected to a pin 54 provided on a second cam member 52 connected to the second end 36 of the crankshaft 32. The pins 50, 54 are connected with the piston arm 40 such that when the piston arm 40 reciprocates, the cam members 48, 52 and thus, the crankshaft 32 rotates.

Turning back to Figs. 8 and 9, the second ratchet mechanism 210 includes a housing 230 with a central aperture 232 that receives either of the first end 44 of the adapter shaft 42 or the second end 36 of the crankshaft 32. Desirably, the housing 230 is positionally fixed with the adapter shaft 42 or the crankshaft 32 so that the housing 230 rotates with the adapter shaft 42 or the crankshaft 32. In one embodiment, the second ratchet mechanism 210 is constructed to act as a centrifugal clutch. In this regard, a face of the housing includes two diagonally opposed apertures 234 in which respective pins 218 for the second ratchet mechanism 210 are received to allow the second ratchet mechanism 210 to pivot with respect to the housing 230. Each pin 218 carries a spring 220 to bias the second ratchet mechanism 210. The second ratchet mechanism 210 includes at least one pivotable ratchet claw 214. Alternatively, the second ratchet mechanism 210 may include a plurality (e.g., two, three, or four) of ratchet claws 214. Generally, two spaced apart ratchet claws 214 are provided.

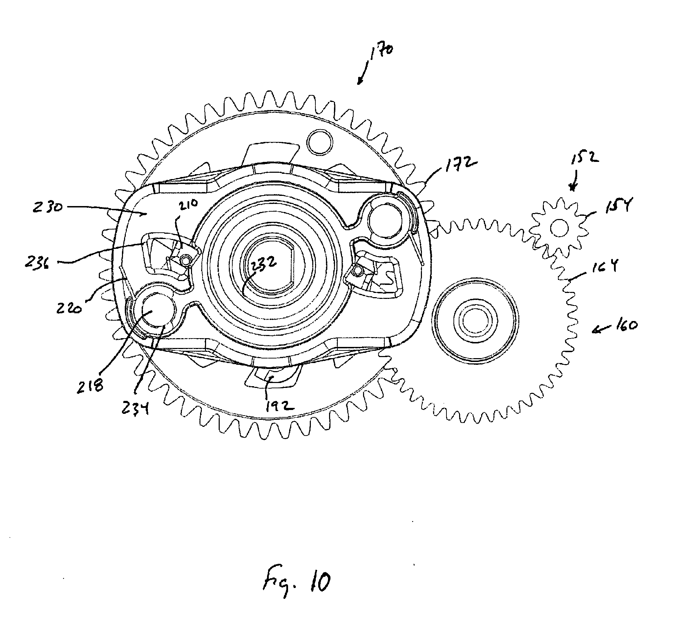

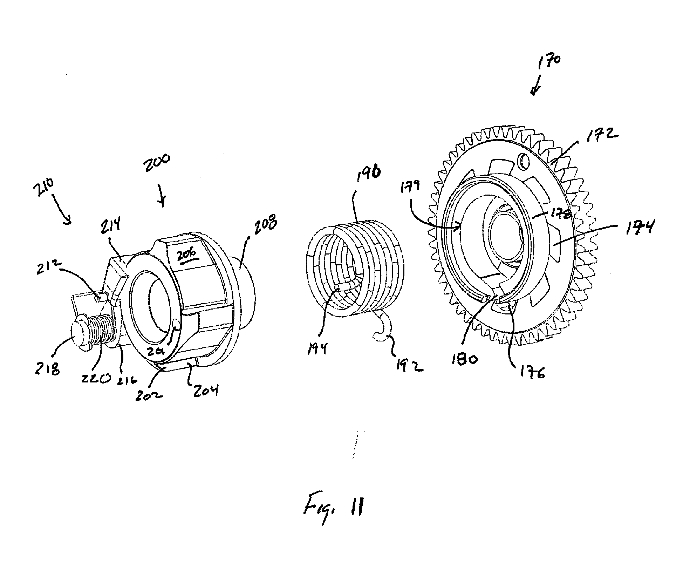

As seen in Fig. 11, the second ratchet mechanism 210 has a ratchet claw 214 at one end and a second end 216 is pivotably received on the pin 218 so that the ratchet claw 214 can pivot to engage and disengage a cam claw 202 on a second cam assembly 200. As best seen in Fig. 10, the face of the housing includes windows 236, in which a portion of the second ratchet mechanism 210 and, in particular, a pin 212 attached to the second ratchet mechanism 210 can pivot radially inward and outward. The window 236 can operate to limit the amount of radial travel of the ratchet claw 214.

As noted above, a coil spring 220 is carried by the pin 218 to bias the ratchet claw 214 toward the cam assembly 200. Accordingly, when the second ratchet mechanism housing 230 is at rest (not spinning), the ratchet claw 214 of the second ratchet mechanism 210 is biased toward the second cam assembly 200.

Turning back to Fig. 8, the motor 152 includes a pinion gear 154 that is connected to a transfer gear 160 through a tooth arrangement 156, 162. The transfer gear 160 has an output gear 164 connected to a starter gear 170 through a tooth arrangement 166, 172. It will be appreciated that each of the gears is continuously engaged.

A shown in Fig. 11, a first side of the starter gear 170 includes a central hub 178 that carries the second cam assembly 200. The central hub 178 faces the engine 30 (i.e., the central hub 178 faces the first cam assembly 100 on the manual starter 70). The electric starter (second) cam assembly 200 is provided on the outer circumferential surface of the central hub 178 of the starter gear 170 and is provided with a plurality of cam claws 202 in the circumferential direction. The cam claws 202 are engaged with and disengaged from the second ratchet mechanism 210. The second ratchet mechanism 210 is carried by the second ratchet mechanism housing 230 that is fixed to the crankshaft 32 or adapter shaft 42. When the cam claws 202 are engaged with the second ratchet mechanism 210, the rotation of the second cam assembly 200 is transmitted to the second ratchet mechanism housing 230, so that the crankshaft 32 of the engine 30 is rotated.

After the engine 30 is started, the second ratchet mechanism housing 230 is rotated by the engine 30 and centrifugal force causes the second ratchet mechanism 210 to move in a direction so that the ratchet claws 214 disengage from the cam claws 202 on the second cam assembly 200. The spring force of the coil spring 220 is such that the second ratchet mechanism 210 acts as a centrifugal clutch. As the rotation of the second ratchet mechanism housing 230 slows, the ratchet claw 214 of the second ratchet mechanism 210 moves in a radially inward direction under the biasing influence of the coil spring 220.

The starter gear 170 may be formed as a single piece or may be formed as two or more pieces. To reduce weight, it may be desirable to form the outer tooth 172 portion from metal and to form the inner portion 174 from plastic. As shown in Fig. 11, a portion of the central hub 178 of the starter gear 170 is provided with a slot 180 to receive a portion of a resilient member 190. The resilient member 190 may be a spring. For example, the resilient member may be a torsion coil damper spring that has a first end 192 and a second end 194. The first end 192 is received within the slot 180. In the illustrative embodiment, the starter gear 170 defines a recess 176 adapted to closely receive a portion of the first end 192 of the resilient member 190. As seen in Fig. 11, the recess 176 is U-shaped to receive a U-shaped first end 192 of the resilient member 190. The second cam assembly 200 includes a boss 208 dimensioned to be received within an opening 179 of the central hub 178. The resilient member 190 surrounds the boss 208. The resilient member 190 has a second end 194 configured to extend in a direction parallel to the longitudinal axis 33 through an aperture 201 formed in the second cam assembly 200. As a result, the starter gear 170 is connected to the second cam assembly 200 through the resilient member 190. The axial length of the boss 208 and a total length of the wound portion of the resilient member 190 may be substantially equal to each other.

As mentioned above, the second cam assembly 200 and the starter gear 170 are joined together in the rotational direction through the resilient member 190. The rotation of the motor pinion gear 154 is therefore transmitted rotationally to the second cam assembly 200 through the elastic force of the resilient member 190. The outer diameter of the boss 208 formed on the second cam assembly 200 is slightly smaller than the inner diameter of the resilient member 190 when the resilient member 190 is in a free state. The resilient member 190 is normally supported in a separated state from the outer circumferential surface of the boss 208. When the second cam assembly 200 is first rotated through the actuation of the electric motor 152 and because of the starting resistance of the engine 30, which is at rest, the resilient member 190 is distorted, and the diameter of the wound portion of the resilient member 190 decreases. As a result, the resilient member 190 is wound around the outer circumferential surface of the boss 208 formed on the cam assembly 200. This action dampens the force between electric starter 150 gear assembly and the second cam assembly 200.

As shown in Fig. 11, the second cam assembly 200 is provided with at least one and typically, a plurality of circumferentially spaced cam claws 202 on the outer circumferential wall. The circumferentially spaced cam claws 202 extend radially from a central hub to define an engagement surface 204 of the cam claw 202 that is engaged by the second ratchet mechanism 210 to transmit rotation of the second cam assembly 200 to the second ratchet mechanism housing 230. Adjacent the cam claw 202, a ramp 206 is provided connecting the radially outward tip of the cam claw 202 to the outer peripheral surface of the central hub. The ramp 206 is sloped in a manner such that the ratchet claw 214 of the second ratchet mechanism 210 can ride on the ramp 206 when the second ratchet mechanism 210 is not being driven by the second cam assembly 200, as will become clear from the following description.

The operation of the electric starter 150 will now be described. Before the engine 30 is started, the second ratchet mechanism 210 is disposed in a position in which the ratchet claw 214 is engaged with the cam claws 202 formed on the second cam assembly 200 due to the biasing of the spring 220. When the electric motor 152 is energized, the pinion gear 154 rotates causing the starter gear 170 to rotate. For example, as shown in Fig. 9, the starter gear 170 is rotated in a counter-clockwise direction. When the starter gear 170 is so rotated, the second cam assembly 200 is rotated in a counter-clockwise direction with the starter gear 170 via the resilient member 190. The cam claws 202 of the second cam assembly 200 engage the ratchet claws 214 of the second ratchet mechanism 210 to cause second ratchet mechanism housing 230 to rotate via the second ratchet mechanism 210 and thus, to cause the crankshaft 32 to rotate to start the engine 30. When the engine 30 is started, however, it rotates the crankshaft 32 at such a speed so that centrifugal force operates to move the ratchet claws 214 of the second ratchet mechanism 210 radially outward against the biasing force of the spring 220 and away from the cam claws 202 on the second cam assembly 200.

It will be appreciated that when the crankshaft 32 is rotated, in this example, in a counter-clockwise direction (when viewed from the front of the housing 22 looking toward the rear of the housing), the rotary member 130 is likewise rotated in the counter-clockwise direction. The first ratchet mechanism 110 thus rotates in a manner so that the ratchet claw 114 rides across the ramp 106 of a cam claw 102 of the first cam assembly 100 and does not engage the cam claw 102 on the first cam assembly 100. Accordingly, operation of the electric starter mechanism 150 does not cause the manual starter 70 (or the rope reel 74) to rotate.

With this operation in mind, one of skill in the art will appreciate that the operation of the manual starter 70 causes the second ratchet mechanism housing 230 to rotate in a manner such that the second ratchet mechanism 210 rotates in a manner so that the ratchet claw 214 rides across the ramp 206 of a cam claw 202 of the second cam assembly 200 and does not engage a cam claw 202 on the second cam assembly 200. Accordingly, operation of the manual starter mechanism 70 does not cause the electric starter 150 (or the starter gear 170) to rotate.

The foregoing detailed description has described only a few of the many forms that this invention can take. For this reason, this detailed description is intended by way of illustration, and not by way of limitation. For example, while the starting system has been described and shown in connection with a half-crank engine, it is understood that the system can be used on a full-crank engine. It is only the following claims, including all equivalents that are intended to define the scope of this invention.

## Claims

1. A starting system for an engine having a crankshaft with a first end and a second end comprising:
a recoil-type manual pulley configured to selectively engage a first ratchet mechanism operatively connected to the first end of the crankshaft; and,
an electric motor gearingly driving a starter gear having a second cam assembly configured to selectively engage a second ratchet assembly operatively connected to the second end of the crankshaft.

2. The starting system of claim 1 wherein operation of the manual pulley is independent of operation of the electric motor.

3. The starting system of claim 1 or 2 wherein the manual pulley includes a rope reel and further comprises a first cam assembly provided on a first side of the rope reel for selectively engaging the first ratchet mechanism.

4. The starting system of claim 3 wherein the first cam assembly includes at least one cam claw to engage the first ratchet mechanism.

5. The starting system of any preceding claim further comprising a rotary member rotationally fixed with the first end of the crankshaft.

6. The starting system of claim 5 wherein the rotary member carries the first ratchet mechanism.

7. The starting system of claim 3 further comprising a rotary member rotationally fixed with the first end of the crankshaft wherein the rotary member carries the first ratchet mechanism.

8. The starting system of claim 7 wherein the first ratchet mechanism is biased radially inward to contact the first cam assembly.

9. The starting system of any preceding claim wherein the second cam assembly includes at least one cam claw to engage the second ratchet mechanism.

10. The starting system of any preceding claim further comprising a torsion spring connecting the starter gear and the second cam assembly.

11. The starting system of any preceding claim wherein when the pulley rotates, the starter gear is stationary.

12. The starting system of any preceding claim wherein when the starter gear rotates, the pulley is stationary.

13. A starting system for an engine having a crankshaft with a first end and a second end comprising:
a manual starter operatively connected to the first end of the crankshaft to rotate the crankshaft in a first direction to start the engine; and,
an electric starter operatively connected to the second end of the crankshaft to rotate the crankshaft in the first direction to start the engine independently of the manual starter.

14. The starting system of claim 13 wherein the manual starter includes a rope reel around which a rope is wound, one end of which is attached to a handle such that when the handle is pulled, the rope reel rotates.

15. The starting system of claim 14 wherein a first side of the rope reel includes a first cam assembly that engages a first ratchet mechanism connected to the first end of the crankshaft to rotate the crankshaft when the rope reel is rotated.

16. The starting system of claim 15 further comprising a rotary member connected to the first end of the crankshaft wherein the rotary member carries the first ratchet mechanism.

17. The starting system of claim 15 or 16 wherein the ratchet mechanism is biased radially inward and when the engine operates to rotate the crankshaft, the ratchet mechanism is moved radially outward.

18. The starting system of any one of claims 13 to 17 wherein the electric starter includes a motor to drive a starter gear connected to a second cam assembly that engages a first ratchet mechanism connected to the second end of the crankshaft.

19. The starting system of claim 18 wherein the motor includes a pinion gear gearingly continuously connected to the starter gear.

20. The starting system of claim 18 or 19 further comprising a torsion spring connecting the starter gear and the second cam assembly.
